# EUROPÄISCHE PATENTSCHRIFT

(11) **EP 1 911 039 B1**
(45) Veröffentlichungstag und Bekanntmachung des Hinweises auf die Patenterteilung: **23.12.2009**
(21) Anmeldenummer: 06762766.1
(22) Anmeldetag: 22.07.2006
(51) Int. Cl.: G21C 7/10

(54) **STEUERSTAB FÜR EINEN DRUCKWASSERKERNREAKTOR**
CONTROL ROD FOR A PRESSURIZED-WATER NUCLEAR REACTOR
BARRE DE COMMANDE DESTINEE A UN REACTEUR NUCLEAIRE A EAU SOUS PRESSION

(30) Priorität: 29.07.2005 DE 102005036367; 11.08.2005 DE 102005037966
(43) Veröffentlichungstag der Anmeldung: 16.04.2008
(73) Patentinhaber: AREVA NP GmbH, 91052 Erlangen (DE)
(72) Erfinder: FUCHS, Hans-Peter, 90409 Nürnberg (DE); SCHEBITZ, Florian, 91056 Erlangen (DE); DEWES, Peter, 91058 Erlangen (DE); FISCHER, Günter, 90768 Fürth (DE); ROPPELT, Alfons, 91301 Forchheim (DE); BECK, Winfried, 96158 Frensdorf (DE)
(74) Vertreter: Mörtel & Höfner
(86) Internationale Anmeldenummer: PCT/EP2006/007225
(87) Internationale Veröffentlichungsnummer: WO 2007/014658

(56) Entgegenhaltungen:
- EP-A- 0 296 954
- EP-A1- 0 945 875
- DE-C1- 19 908 195
- US-A- 2 941 933
- US-A- 3 261 756

## Beschreibung

Die Erfindung bezieht sich auf einen Steuerstab für einen Druckwasserkernreaktor.

Der Steuerstab eines Druckwasserkernreaktors besteht im wesentlichen aus einem zylindrischen Hüllrohr, in dem ein zy-, lindrischer Absorberstab angeordnet ist. Das Hüllrohr ist nach außen dicht verschlossen und mit einem Gas, beispielsweise ein Edelgas, befüllt, dessen Fülldruck bei Raumtemperatur maximal 1,5 bar beträgt. Im Laufe des Betriebs findet nun in Bereichen mit hoher Neutronenflussdichte, d. h. insbesondere in einem unteren Bereich des Steuerstabs, eine durch die Neutronenabsorption verursachte Volumenvergrößerung des Absorberstabs statt. Diese als Schwellen bezeichnete und mit wachsender Betriebsdauer zunehmende Volumenvergrößerung kann in diesem Bereich zu einer radikalen Dehnung des Hüllrohres und im ungünstigen Fall zu dessen Beschädigung führen, so dass der Steuerstab noch vor dem Ende seiner berechneten Einsatzzeit, d. h. bereits zu einem Zeitpunkt, in dem er an sich noch eine ausreichende neutronenabsorbierende Wirkung hat, ausgetauscht werden muss.

Aus fertigungstechnischen Gründen werden die Steuerstäbe mit einem diametralen-Spalt von ca. 100 um zwischen Absorberstab und Hüllrohr gefertigt (Referenzdesign). Während des Betriebs der Steuerstäbe verringert sich der vorhandene Spalt durch das Niederkriechen des Hüllrohrs, d.h. durch eine durch Neutronenbestrahlung und Überdruck induzierte Verringerung des Durchmessers des Hüllrohrs, und durch das Schwellen des Absorberstabs.

Um die eingangs erwähnten Probleme zu reduzieren, die mit dem im unteren Bereich ausgeprägter auftretenden Schwellen des Absorberstabs einhergehen, und um dort den Spaltschluss zu verzögern, ist es im Stand der Technik bekannt, den Durchmesser des Absorberstabs in einem unteren Abschnitt auf einer Länge von bis zu etwa 350 mm zu reduzieren, so dass sich dort der ringförmige Spalt um weitere maximal 130 µm diametral vergrößert. Dadurch wird ein Freiraum zur Verfügung gestellt, in den hinein sich der Absorberstab ausdehnen kann. Auch mit dieser Maßnahme konnte jedoch eine befriedigende Verringerung der mit dem Schwellen des Absorberstabs einhergehenden Dehnung des Hüllrohrs nicht erzielt werden.

Der Erfindung liegt nun die Aufgabe zu Grunde, einen Steuerstab für einen Druckwasserkernreaktor anzugeben, bei dem das Ausmaß der durch das Schwellen des Absorberstabs verursachten Dehnung des Hüllrohrs verringert ist.

Die genannte Aufgabe wird gemäß der Erfindung gelöst mit einem Steuerstab mit den Merkmalen des Patentanspruches 1. Gemäß diesen Merkmalen enthält der Steuerstab einen Absorberstab, der in einem Hüllrohr angeordnet ist und der zumindest in einem unteren Abschnitt an höchstens einem Teil seiner Umfangsfläche mit wenigstens einer Ausnehmung derart versehen ist, dass innerhalb des den Absorberstab umgebenden Hüllrohrs ein Freiraum bereitgestellt wird.

Die Erfindung beruht dabei auf der Erkenntnis, dass der im Stand der Technik bekannte und sich über den gesamten Umfang und über eine größere Strecke erstreckende vergrößerte Spalt im unteren Abschnitt mit einer deutlich verschlechterten Wärmeübertragung vom Absorberstab zum Hüllrohr und von diesem zum Kühlwasser verbunden ist, so dass sich der Absorberstab in diesem Abschnitt deutlich mehr aufheizt. Dies führt zu einer höheren Verformung des Absorberstabs, die durch die beim Verfahren der Steuerstäbe aufgrund der hohen Beschleunigung auf den Absorberstab wirkenden axialen Kräfte verursacht ist. Diese Zunahme der Kriechverformung ist als "slumping" bekannt und führt zu einer schnelleren Verringerung des gewonnenen Freiraums, so dass dieser nicht mehr oder nur noch teilweise zur Aufnahme des durch Neutronenabsorption schwellenden Absorberstabs zur Verfügung steht.

Da gemäß der Erfindung nicht nur durch eine Ausnehmung ein innerhalb des den Absorberstab umgebenden hohlzylindrischen Hüllrohrs ein Freiraum bereitgestellt wird, in den der anschwellende Absorber durch eine infolge der Schwellung auftretende plastische Deformation eindringen kann, sondern zusätzlich dafür Sorge getragen ist, dass der Absorberstab in diesem Abschnitt an höchstens einem Teil seiner Umfangsfläche mit Ausnehmungen versehen ist, d.h. in diesem Abschnitt auf einem Teil seiner Umfangsfläche keinen vergrößerten Spalt gegenüber dem Referenzdesign aufweist, ist sichergestellt, dass trotz der Einbringung einer Ausnehmung ein ausreichender Wärmetransport nach außen stattfinden kann. Auf diese Weise tritt in diesem Bereich nur ein vernachlässigbarer Temperaturanstieg im Absorber auf, so dass die mit einer solchen Temperaturerhöhung einhergehende Zunahme der Kriechverformung praktisch keine Rolle spielt und durch den infolge der Ausnehmung entstandenen Freiraum deutlich überkompensiert wird. Darüber hinaus wird durch das Einbringen einer Ausnehmung die Oberfläche des Absorberstabs vergrößert und damit dessen Wirksamkeit verbessert.

Durch diese Maßnahmen ist somit das Risiko verringert, den Steuerstab noch vor dem Ende seines berechneten Einsatzzeitraumes austauschen zu müssen.

Die Ausnehmung kann durch eine schraubenförmig am Außenumfang umlaufende Rille, durch eine ringförmige Rille, durch eine am Außenumfang des Absorberstabs verlaufende Längsrille oder durch eine sich in Axialrichtung erstreckende Bohrung gebildet sein. Diese konstruktiven Maßnahmen können sowohl einzeln als auch in Kombination miteinander vorgenommen werden.

Alternativ oder ergänzend hierzu kann der vergrößerte Freiraum auch dadurch erzeugt werden, dass der Absorberstab zumindest an seinem unteren Ende mit einer Fase versehen ist, deren Länge größer als 1 mm und deren Fasenwinkel kleiner als 30° ist, insbesondere zwischen 2° und 30° beträgt.

Wenn außerdem der Steuerstab mit einem Edelgas, vorzugsweise Helium He befüllt ist, dessen Fülldruck gemessen bei Raumtemperatur größer als 1,5 bar (absolut), insbesondere größer als 10 bar (absolut), ist, wird durch die damit einhergehende verbesserte Wärmeübertragung im Bereich der Ausnehmung die Temperaturerhöhung des Absorbermaterials zusätzlich verringert. Durch einen.höheren Fülldruck wird außerdem das vorstehend erläuterte Niederkriechen des Hüllrohrs verringert, da der Fülldruck dem äußeren Druck entgegen wirkt. Dabei hat sich herausgestellt, dass bereits durch eine Erhöhung des Fülldrucks auf etwa 50 bar eine Erhöhung der Betriebszeit um zusätzlich 2 bis 4 Betriebszyklen erwartet werden kann.

Zur weiteren Erläuterung der Erfindung wird auf die Ausführungsbeispiele der Zeichnung verwiesen. Es zeigen:
Figuren 1a,b einen Absorberstab gemäß der Erfindung in einer Seitenansicht bzw. in einer Draufsicht auf eine seiner Stirnflächen,
Figur 2 einen Teil-Längsschnitt durch einen Steuerstab mit einem Absorberstab gemäß Figuren 1a,b,
Figuren 3a,b und 4a,b jeweils in einer Seitenansicht und in einer Draufsicht auf die Stirnfläche alternative Ausführungen eines Absorberstabes gemäß der Erfindung.

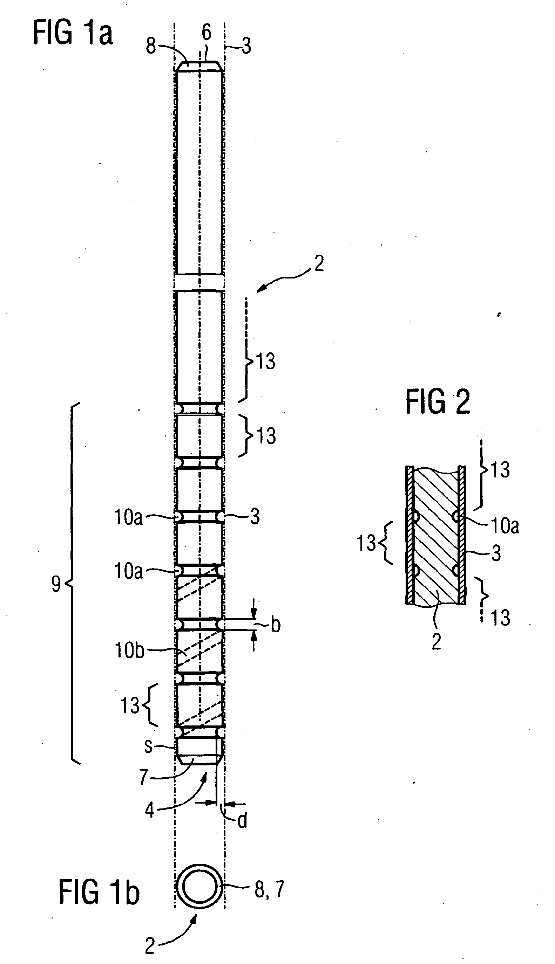

Gemäß Figur 1 hat ein Absorberstab 2 eine im wesentlichen zylindrische Gestalt. An seinem unteren und oberen Ende 4 bzw. 6 ist er konisch geformt, d. h. mit einer Fase 7 bzw. 8 versehen. Der Absorberstab 2, der axial aus einer Mehrzahl von Teilstäben zusammengesetzt sein kann, wird in ein in der Figur nur strichpunktiert angedeutetes Hüllrohr 3 eingebaut, von dem er gasdicht umschlossen ist. Als "unteres Ende" ist dabei das Ende des Absorberstabs 2 zu verstehen, mit dem er im eingebauten Zustand und im Betrieb gemeinsam mit dem Hüllrohr 3 in ein Steuerstabführungsrohr eines Brennelementes eingeführt wird.

In einem an diesen konischen Bereich 7 anschließenden unteren Abschnitt 9 ist der Absorberstab 2 mit einer Mehrzahl von Ausnehmungen in Form von ringförmig umlaufenden Rillen 10a oder Nuten versehen. Im Bereich dieser Ausnehmungen weist somit der Absorberstab 2 senkrecht zu seiner Längsachse eine Querschnittsfläche auf, die deutlich kleiner ist als die zur Längsachse senkrechte Querschnittsfläche des in der Figur strichpunktiert angedeuteten zylindrischen Hüllrohrs 3. In einem Bereich 13 zwischen den Rillen 10a oder anschließend an die Rillen 10a hat der Absorberstab 2 eine zylindrische Gestalt und weist dort einen Durchmesser auf, der nur geringfügig unter dem Durchmesser des Hüllrohrs 3 liegt, so dass in diesem Bereich 13 nur ein kleiner, in der Figur kaum erkennbarer Spalt s in der Größenordnung von etwa 100 µm zum Hüllrohr 3 besteht. Mit anderen Worten: Nur in einem Teilbereich der Umfangsfläche des unteren Abschnittes 9 ist der Absorberstab 2 mit Ausnehmungen versehen. Im Ausführungsbeispiel beträgt die Tiefe d der Rillen etwa 1 mm und deren Breite b etwa 2 mm, so dass sich bei sieben Rillen, die sich jeweils im Abstand von etwa 1 cm voneinander befinden, ein Freiraum mit einem Volumen in der Größenordnung von etwa 270 mm³ ergibt. In diesen Freiraum kann sich der anschwellende Absorberstab 2 ausdehnen, ohne dass es zu einer Dehnung des Hüllrohrs 3 führt.

Der Figur la ist außerdem zu entnehmen, dass die Fläche, mit der der Absorberstab 2 im Abschnitt 9 im eingebauten Zustand in Kontakt mit dem Hüllrohr steht, nur geringfügig, im Ausführungsbeispiel nur um etwa 10 - 20 % verringert ist.

Anstelle ringförmiger Rillen 10a können auch schraubenförmige Rillen 10b vorgesehen sein, wie sie in der Figur gestrichelt angedeutet sind.

Figur 2 zeigt nun einen Ausschnitt aus einem Steuerstab, in dessen Hüllrohr 3 der Absorberstab 2 gemäß Figuren 1a,b angeordnet ist. Deutlich ist zu erkennen, dass zwischen dem Absorberstab 2 und der Innenfläche des Hüllrohrs 3 in seinen an die Rillen 10a anschließenden Bereichen 13 nur ein kleiner Spalt besteht, so dass dort ein guter Wärmetransport stattfindet.

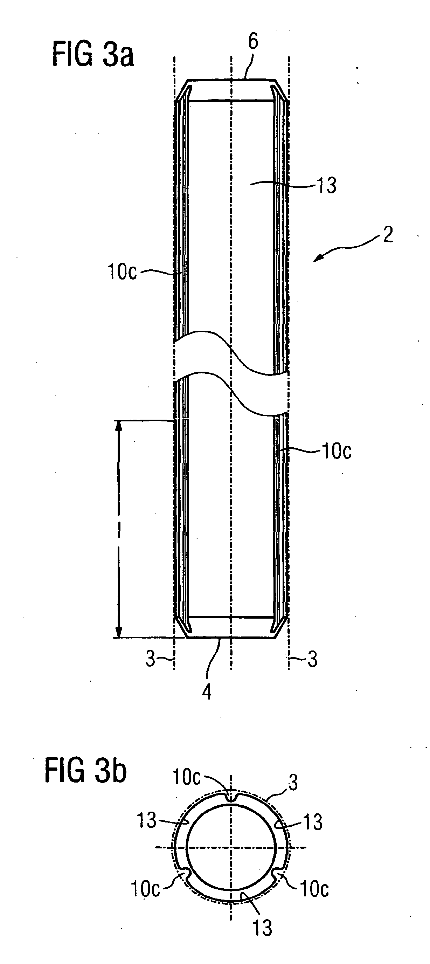

In der Ausgestaltung gemäß Figuren 3a und b wird die Ausnehmung durch eine Mehrzahl von in Axialrichtung verlaufenden Längsrillen 10c gebildet, die sich im dargestellten Ausführungsbeispiel über die gesamte Länge des Absorberstabs 2 erstrecken, so dass der Absorberstab 2 symmetrisch ist, und unteres und oberes Ende 4, 6 vertauscht werden können. In der Praxis hat sich herausgestellt, dass es ausreichend ist, wenn sich die Längsrillen 10c ausgehend vom unteren Ende 4 über eine Länge 1 von etwa 100 -300 mm erstrecken, da nur in diesem Bereich die Neutronenbelastung sehr hoch ist und zu einem ausgeprägten Schwellen führt. Zwischen den Längsrillen 10c befinden sich die Bereiche 13, in denen zwischen dem Absorberstab 2 und dem Hüllrohr 3 nur ein kleiner Spalt vorliegt.

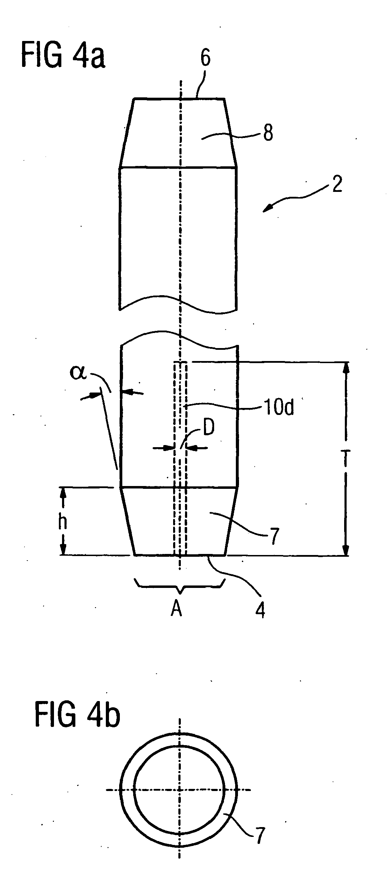

In der Ausführungsform gemäß Figuren 4a und b sind die konischen Bereiche oder die Fasen 7, 8 durch eine Verkleinerung des Fasenwinkels α auf Werte zwischen 2° und 30° sowie eine Vergrößerung der Länge h der Fasen 7,8, d.h. der Höhe des konischen Bereiches auf Werte größer als 1 mm modifiziert. Auf diese Weise wird ein vergrößerter Freiraum geschaffen, in den das Absorbermaterial schwellen kann. Da der Fasenwinkel α verkleinert und zugleich die Höhe h des konischen Bereiches vergrößert wird, kann der durch diese Fasen 7,8 entstehende Freiraum bei gleichbleibender Stirnfläche A des Absorberstabs 2 vergrößert werden. Auch in diesem Fall ist es ausreichend, nur eine der Fasen 7, 8 zu modifizieren. Wird nur eine Fase modifiziert, beispielsweise die Fase 7, wird das untere Ende 4 des Absorberstabs 2 festgelegt. Mit anderen Worten: Der Absorberstab kann dann nur noch in einer Richtung im Hüllrohr des Steuerstabs angeordnet werden.

In der Figur ist zusätzlich am unteren Ende eine Ausnehmung in Form einer zentralen axialen Bohrung 10d eingebracht, die ebenfalls als Freiraum dient und ergänzend oder alternativ zu den vorstehend und nachstehend erläuterten Maßnahmen durchgeführt werden kann. Eine solche Bohrung 10d weist typischerweise einen Durchmesser D von etwa 3 mm und eine Tiefe T von etwa 50 - 100 mm auf. Wenn eine solche Bohrung 10d eingebracht wird, ist darauf zu achten, dass die Stirnfläche A, die zugleich Auflagefläche des Absorberstabs 2 auf eine Innenfläche des Hüllrohrs ist, durch entsprechende Gestaltung der Fase 7 nicht verringert wird.

Die in Figur 4a,b dargestellte Maßnahme kann dabei auch in Kombination mit der in Figuren 1a,b dargestellten umlaufenden Rillen 10a, b oder den in Figuren 3a,b dargestellten Längsrillen 10d eingesetzt werden. Anstelle der gezeigten Rillen, Nuten oder der Axialbohrung können auch Ausnehmungen mit anderen geometrischen Formen, beispielsweise muldenförmige Vertiefungen oder Löcher, vorgesehen sein. Wesentlich ist nur, dass durch diese ein zusätzlicher Freiraum entsteht, in die der Absorberstab hineinschwellen kann, und dass diese höchstens einen Teil der Umfangsfläche des unteren Abschnittes einnehmen.

## Patentansprüche

1. Steuerstab für einen Druckwasserkernreaktor, mit einem Absorberstab (2), der in einem Hüllrohr (3) angeordnet ist, und der zumindest in einem unteren Abschnitt (9) mit wenigstens einer Ausnehmung (10a-d) versehen ist, die höchstens einen Teil seiner Umfangsfläche einnimmt, so dass innerhalb des den Absorberstab (2) umgebenden hohlzylindrischen Hüllrohrs (3) ein Freiraum bereitgestellt wird.

2. Steuerstab nach Anspruch 1, bei dem die zumindest eine Ausnehmung eine am Außenumfang des Absorberstabs (2) umlaufende Rille (10a, b) ist.

3. Steuerstab nach Anspruch 2, bei dem die Rille (10b) schraubenförmig ist.

4. Steuerstab nach Anspruch 2, bei dem die Rille (10a) ringförmig ist.

5. Steuerstab nach Anspruch 1, bei dem die zumindest eine Ausnehmung eine am Außenumfang in Axialrichtung des Absorberstabs (2) verlaufende Längsrille (10c) ist.

6. Steuerstab nach Anspruch 1, bei dem die zumindest eine Ausnehmung eine sich in Axialrichtung erstreckende Bohrung (10d) ist.

7. Steuerstab für einen Druckwasserkernreaktor, insbesondere nach einem der vorhergehenden Ansprüche, mit einem Absorberstab (2) der zumindest an einem seiner Enden eine Fase (7, 8) aufweist, deren Länge (h) größer als 1 mm und deren Fasenwinkel (α) kleiner als 30° ist.

8. Steuerstab nach Anspruch 7, bei dem der Fasenwinkel (α) zwischen 2° und 30° beträgt.

9. Steuerstab nach einem der vorhergehenden Ansprüche, der mit einem Edelgas befüllt ist, dessen Fülldruck gemessen bei Raumtemperatur größer als 1,5 bar ist.

## Claims

1. Control rod for a pressurized-water nuclear reactor, comprising an absorber rod (2) which is arranged in a cladding tube (3) and which is provided at least in a lower section (9) with at least one cutout (10a-d), which covers at most part of the circumferential surface of the absorber rod, such that a free space is provided inside the hollow-cylindrical cladding tube (3) which surrounds the absorber rod (2).

2. Control rod according to Claim 1, in which the at least one cutout is a groove (10a, b) which extends around the external circumference of the absorber rod (2).

3. Control rod according to Claim 2, in which the groove (10b) is helical.

4. Control rod according to-Claim 2, in which the groove (10a) is annular.

5. Control rod according to Claim 1, in which the at least one cutout is a longitudinal groove (10c) which extends on the external circumference in the axial direction of the absorber rod (2).

6. Control rod according to Claim 1, in which the at least one cutout is a bore (10d) which extends in the axial direction.

7. Control rod for a pressurized-water nuclear reactor, in particular according to one of the preceding claims, comprising an absorber rod (2) which has a chamfer (7, 8) at least at one of its ends, the length (h) of which is greater than 1 mm and the chamfer angle (α) of which is less than 30°.

8. Control rod according to Claim 7, in which the chamfer angle (α) is between 2° and 30°.

9. Control rod according to one of the preceding claims, which is filled with a noble gas, the filling pressure of which is greater than 1.5 bar, measured at room temperature.

## Revendications

1. Barre de commande pour un réacteur nucléaire à eau sous pression, comprenant un crayon absorbant (2), qui est disposé dans une gaine (3), et qui est doté au moins dans une partie (9) inférieure d'au moins un évidement (10a-d) qui occupe au maximum une partie de sa surface périphérique, de sorte qu'un espace libre est mis à disposition à l'intérieur de la gaine (3) cylindrique creuse entourant le crayon absorbant (2).

2. Barre de commande selon la revendication 1, sur laquelle le au moins un évidement est une rainure (10a, b) périphérique sur le pourtour extérieur du crayon absorbant (2).

3. Barre de commande selon la revendication 2, sur laquelle la rainure (10b) est en forme d'hélice.

4. Barre de commande selon la revendication 2, sur laquelle la rainure (10a) est en forme de bague.

5. Barre de commande selon la revendication 1, sur laquelle le au moins un évidement est une rainure longitudinale (10c) agencée sur le pourtour extérieur dans la direction axiale du crayon absorbant (2).

6. Barre de commande selon la revendication 1, sur laquelle le au moins un évidement est un trou (10d) s'étendant dans la direction axiale.

7. Barre de commande pour un réacteur nucléaire à eau sous pression, en particulier selon l'une quelconque des revendications précédentes, comprenant un crayon absorbant (2), qui présente au moins sur l'une de ses extrémités un chanfrein (7, 8) dont la longueur (h) est supérieure à 1 mm et dont l'angle de chanfrein (α) est inférieur à 30°.

8. Barre de commande selon la revendication 7, sur laquelle l'angle de chanfrein (α) varie entre 2° et 30°.

9. Barre de commande selon l'une quelconque des revendications précédentes, qui est remplie d'un gaz rare dont la pression de remplissage, mesurée à la température ambiante, est supérieure à 1,5 bar.
